(19) Europäisches Patentamt

European Patent Office

Office européen des brevets

(11) **EP 4 650 853 A1**

(12) **EUROPEAN PATENT APPLICATION**

(43) Date of publication:
**19.11.2025  Bulletin 2025/47**

(21) Application number: **24176078.4**

(22) Date of filing: **15.05.2024**

(51) International Patent Classification (IPC):
**G02B 21/36** (2006.01)    **G06N 3/02** (2006.01)
**G06T 7/00** (2017.01)      **G06V 10/82** (2022.01)

(52) Cooperative Patent Classification (CPC):
**G02B 21/365; G06N 3/02; G06N 3/045; G06N 3/08;
G06V 10/82; G06V 10/993**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **Leica Microsystems CMS GmbH
35578 Wetzlar (DE)**

(72) Inventor: **KAPPEL, Constantin
35578 Wetzlar (DE)**

(74) Representative: **2SPL Patentanwälte PartG mbB
Landaubogen 3
81373 München (DE)**

(54) **ASSISTANCE AND AUTOMATION OF MICROSCOPE SETUP BASED ON  IMAGES AND SEMANTIC PARAMETER EMBEDDINGS**

(57)     A method (100) of operating an imaging instrument comprises using an image as an input for a pretrained image model (110), the pre-trained image model generating a prediction of embeddings of keys and associated predicted values as an output. The method (100) further comprises comparing the prediction of the embeddings of the keys and the associated predicted values of the pretrained image model with pre-computed embeddings of the keys and the associated values used to generate the image (120). The method (100) comprises generating information on a quality of the values used to generate the image (130).

FIG. 1

100

**Description**

**Technical field**

Examples relate to a method for an imaging instrument, such as a microscope, a method, a system, a microscope, and a computer program.

**Background**

Modern biomedical imaging instruments require significant domain expertise due to their complex structure and complicated settings. For example, a microscope comprises a variety of illumination sources, optical features, actuators and photosensors, which are often software controlled. In order to operate the microscope properly, a user may need to have significant knowledge in all the associated systems of the microscope. This may limit the number of operating users capable to appropriately operate a microscope and can be a potential source of error in operating the microscopes, eventually resulting in degraded results and inferior quality of images. Artificial intelligence (AI) has conventionally been used in numerous domains to assist or improve various aspects of biomedical imaging. AI has been used for image enhancement and restoration, automated image analysis, object recognition and classification, diagnosis, and data integration correlation. These applications relate to the images acquired by an imaging instrument and may be limited depending on quality of the acquired images. Hence, there may be a need for an improved concept to operate an imaging instrument.

**Summary**

This desire is addressed by the subject-matter of the independent claims.

The concept proposed in the present disclosure is based on a method of operating an imaging instrument. The method can utilize an image as an input for a pre-trained image model. The pre-trained image model can generate a prediction of embeddings of keys and associated predicted values as an output. Further, the method can compare the prediction of the embeddings of the keys and the associated predicted values of the pre-trained image model with pre-computed embeddings of the keys and the associated values used to generate images. Then, the method can generate information on a quality of the values used to generate the image. In this way, the method can provide a way to acquire an image with better quality without a manual user intervention. Further, the method can assist a user in choosing right instrument settings or even automate a process of setting up an imaging instrument using the pre-trained image model while minimizing human intervention.

Examples provide a method of operating an imaging instrument. The method comprises using an image as an input for a pre-trained image model. The pre-trained image model is configured to generate a prediction of embeddings of keys and associated predicted values as an output. Further the method comprises comparing the prediction of the embedding of the keys and the associated predicted values of the pre-trained image model with pre-computed embeddings of the keys and the associated values used to generate the image. The method further comprises generating information on a quality of the values used to generate the image. In this way, the method can provide a way to operate the imaging instrument using relationships between images and desirable instrument setup for better quality images, such as image resolution and image contrast, offered by the pre-trained image model.

In an example, the keys may be parameters of the imaging instrument comprising at least one of illumination characteristics, information on optics used, actuator settings, photosensors used, information of a specimen type, information on an organism, information on a cell culture system, information on chemical or physical perturbations.

In an example, the method may further comprise alerting a user of the imaging instrument to adapt at least one value associated to a parameter. In this way, the method can assist the user to adapt an imaging acquisition parameter to acquire an image with desirable quality.

In an example, the method may further comprise generating a recommendation whether at least one value associated to a parameter is to be increased or decreased. In this way, the method can further reduce parameter setup time for the user.

In an example, the method may further comprise adjusting at least one value associated to a parameter of the imaging instrument using the predicted values. In this way, the method can provide an automated assistance to the user without an intervention of an expert to setup the imaging instrument to improve a quality of an image.

In an example, the method may further comprise using information about images acquired using the imaging instrument as a training data set to the pre-trained image model. In this way, the method can be used for various imaging instruments comprising different parameters and a variety of specimens for imaging and be improved continuously.

Examples provide a method of training an image model for use in an imaging instrument. The method comprises obtaining an image and corresponding keys and associated values used to acquire the image. Further, the method comprises training the image model using the image as an input to predict embeddings of the keys and the associated values. The training comprises using pre-computed embeddings of the keys and the associated values used to acquire the image to compute a loss function. In this way, the method can map image representation into a semantic space without a labeled data set, which may cause time-consuming training data set preparation.

In an example, the keys may be parameters of the imaging instruments comprising at least one of illumination characteristics, information on optics used, actuator settings, photosensors used, information of a specimen type, information on an organism, information on a cell culture system, information on chemical or physical perturbations.

In an example, the values may be normalized to be converted to a percentage.

In an example, the normalized values may be represented with the embeddings of the keys as tuples.

In an example, the loss function may comprise contributions of a loss caused by the embeddings of the keys, a loss caused by the associated values, and a loss caused by a quantization of the predicted embeddings of the keys. In this way, the loss function can optimize a model with respect to multiple objectives simultaneously by considering losses caused by different sources.

In an example, the loss caused by the embeddings of the keys and by the associated values may be computed as a negative log likelihood of a similarity between the predicted embeddings of the keys and associated values by the image model and the pre-computed embeddings of the keys and the associated values.

In an example, the trained image model may predict embeddings of keys and associated values resulting in an image fulfilling a predetermined quality criterion. In this way, the trained image model can determine a quality of an input image.

In an example, the method may further comprise receiving information about images from the imaging instrument to be used as a training data set. In this way, the method can be used in various imaging instruments and imaging different specimens and be improved continuously.

Examples relate to a system for providing assistance to an imaging instrument. The system comprises an input interface. The input interface is configured to receive an image acquired using the imaging instrument. The system further comprises a processor. The processor is configured perform the method of any of examples as described above. In this way, the system can provide assistance to an imaging instrument, which may reduce human intervention for operating the imaging instrument.

Examples relate to a microscope. The microscope comprises an output interface. The output interface is configured to transmit an image acquired together with corresponding keys or embeddings of the keys and associated values to associated values to a system for providing assistance to an imaging instrument.

In an example, the microscope may further comprise an input interface. The input interface is configured to receive at least values associated with keys or embeddings of keys from the system for providing assistance to the imaging instrument.

In an example, the microscope may further comprise an interface to a laboratory information management system.

Various examples of the present disclosure relate to a corresponding computer program with a program code for performing the above method when the computer program is executed on a processor.

## Brief description of the Figures

Some examples of apparatuses and/or methods will be described in the following by way of example only, and with reference to the accompanying figures, in which

Fig. 1 illustrates an exemplary flowchart of a method of operating an imaging instrument;
Fig. 2 illustrates an exemplary output of an assistance system generating a recommendation;
Fig. 3 illustrates an exemplary flowchart of a method of training an image model;
Fig. 4 illustrates an exemplary schematic diagram of a training procedure within an embodiment illustrated in Fig. 3;
Fig. 5 schematically illustrates a system for providing assistance to an imaging instrument;
Fig. 6 illustrates an embodiment of a microscope; and
Fig. 7 illustrate a schematic diagram of a system comprising the microscope and a computer system.

## Detailed Description

Some examples are now described in more detail with reference to the enclosed figures. However, other possible examples are not limited to the features of these embodiments described in detail. Other examples may include modifications of the features as well as equivalents and alternatives to the features. Furthermore, the terminology used herein to describe certain examples should not be restrictive of further possible examples.

Throughout the description of the figures same or similar reference numerals refer to same or similar elements and/or features, which may be identical or implemented in a modified form while providing the same or a similar function. The thickness of lines, layers and/or areas in the figures may also be exaggerated for clarification.

When two elements A and B are combined using an "or", this is to be understood as disclosing all possible combinations, i.e. only A, only B as well as A and B, unless expressly defined otherwise in the individual case. As an alternative wording for the same combinations, "at least one of A and B" or "A and/or B" may be used. This applies equivalently to combinations of more than two elements.

If a singular form, such as "a", "an" and "the" is used and the use of only a single element is not defined as mandatory either explicitly or implicitly, further examples may also use several elements to implement the same function. If a function is described below as implemented using multiple elements, further examples may implement the same function using a single element or a single processing entity. It is further understood that the terms "include", "including", "comprise" and/or "comprising", when used, describe the presence of the specified features, integers, steps, operations, processes, elements, components and/or a group thereof, but do not exclude the presence or addition of one or more other features, integers, steps, operations, processes, elements, components and/or a group thereof.

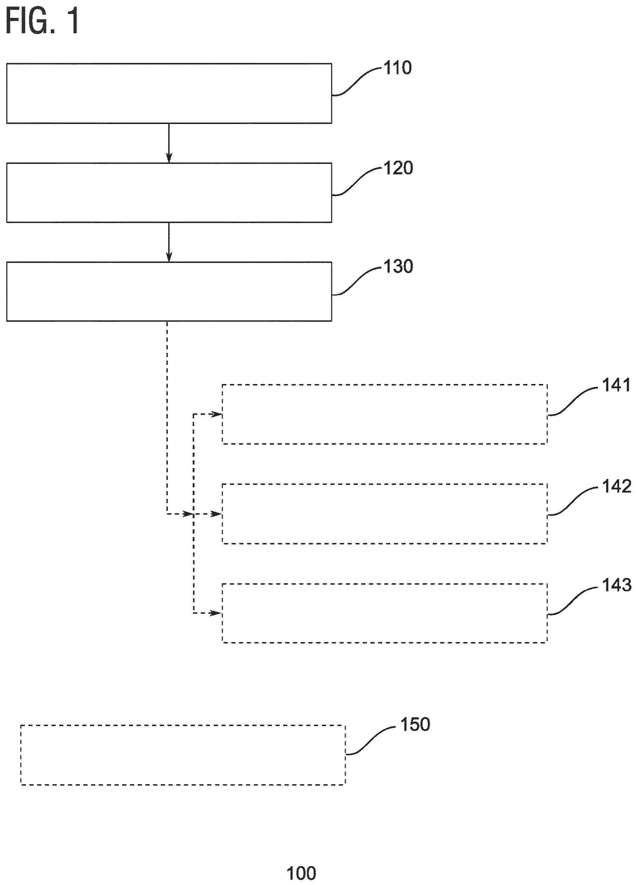

**Fig. 1** illustrates an exemplary flowchart of a method 100 of operating an imaging instrument. The method 100 comprises using an image as an input for a pre-trained image model 110, wherein the pre-trained image model generates a prediction of embeddings of keys and associated predicted values as an output. The method 100 further comprises comparing the prediction of the embedding of the keys and the associated predicted values of the pre-trained image model with pre-computed embeddings of the keys and the associated values 120. Lastly, the method 100 comprises generating information 130 on a quality of the values used to generate the image.

In an imaging instrument, the setup of the imaging instrument may be performed by defining values for parameters required by the imaging instrument to be operational. The parameters may be identified by specific terms, for example as "focal length", "resolution", etc. These descriptive terms of different setup options are also called keys and the setup is performed by assigning a value to each key.

The imaging instrument can generate mainly two kinds of data: images as in multi-dimensional arrays of values, and metadata. The metadata may be available as structured data, such as dictionaries of key-value pairs, which are used to obtain an image using the instrument as described above. In this context, the metadata is instrument metadata. The metadata can also comprise experiment metadata, which is related to information about a sample being used and other settings besides the instrument metadata. Both experiment metadata and instrument metadata influence an appearance of a resulting image.

Modern imaging instruments are equipped with variety of components. For example, a microscope comprises various illumination sources, optical features, actuators, and photosensors. Therefore, setting up such an intricate system can be a complex and time-consuming process that necessitates a substantial level of expertise in microscopy. Therefore, when an image is acquired using an imaging instrument, the metadata of the image may comprise a large quantity of key-value pairs.

Moreover, different manufacturers of microscopes may use different terms for the same functionality. Some acquisition parameters can be interrelated. For example, in microscopy, a resolution of a microscope is related to a numerical aperture of the objective lens and the wavelength of light used. Higher numerical aperture lenses can resolve finer details of a prepared sample, but they also require more careful focusing and illumination control. Therefore, interrelations between imaging parameters may need to be considered for optimizing the image instrument settings to achieve a desirable image quality. This can be a challenge and a time-consuming process for an operator of an imaging instrument to set up an imaging protocol and to adapt values of keys iteratively based on the quality of the acquired image.

Embodiments described herein may assist a user in choosing the right settings or even automate the process of setting up an imaging instrument using the pre-trained image model while minimizing human intervention.

According to the previously defined method 100, the current image is passed through the pre-trained image model, which generates a prediction of embeddings of keys and associated predicted values as an output 110. Referring again to Fig. 1, examples of keys may be names of parameters of the imaging instrument comprising at least one of illumination characteristics, information on optics used, actuator settings, photosensors used, information of a specimen type, information on an organism, information on a cell culture system, information on chemical or physical perturbations.

Then, its prediction is compared to the pre-computed parameter embeddings of the keys and the associated values 120. The pre-trained image model may have been trained on images with different qualities and specimens to predict embeddings of the keys and the associated values, which leads to generate good quality of images based on a user definable quality threshold. Therefore, the pre-trained image model can be utilized in various imaging instruments operation with different sample or specimens based on contents of images used for training of the image model. The embeddings of the keys can be understood as vector representation of words or phrases, capturing semantic meanings. The pre-trained image model may be trained so as to learn image representations which are close to embeddings of the keys.

In some embodiments, the comparison 120 between the prediction and the pre-computed embeddings of the keys and the associated values may be performed using a similarity metric to find a closest matching result from the pre-computed embeddings of the keys and the associated values. The similarity metric may be advantageously a cosine similarity. The cosine similarity can be understood as a measure of similarity between two non-zero vectors defined in an inner product space. For example, two vectors in the same direction can have a cosine similarity of 1. Two orthogonal vectors can have a cosine similarity of 0 and two opposite vectors can have a cosine similarity of -1. In some contexts, the component values of the vectors cannot be negative, in which case the cosine similarity is bounded in [0,1]. It is worth to note that the associated predicted values can be concatenated with the prediction of the embeddings of the keys or stored with the prediction of the embeddings of the keys as tuples, such as $(e_m, v_m)$, wherein $e_m$ is an embedding of a key and $v_m$ is an associated value.

In other words, the method 100 may represent instrument parameters in a latent semantic embedding space using the pre-trained image model which maps input images to the semantic embedding space. This vectorial representation of instrument parameters may allow a system to learn relationships between images and desirable instrument setup (keys and values) as well as computing the direction in which to improve without an intervention of experts in relevant domains. For example, the pre-trained image model may optionally be a deep neural network such as a convolutional neural network. It may also be a visual transformer depending on applications.

Based on the comparison 120 and the information on the quality of the values used to generate the image 130, a conclusion may optionally be drawn as to whether the values used to generate the image should be subject to change or not. If, for example, a deviation between the values used to generate the image and the predicted values is above a determined threshold, one may conclude that it is appropriate to change the values used to generate the image to become closer to the predicted values. The deviation may be determined using an arbitrary similarity or distance metric.

After comparing the prediction of the embeddings of the keys and the associated values of the pre-trained image model with the pre-computed embeddings of the keys and the associated keys 120, an output from the similarity metric can be applied to different ways to operating the imaging instrument. Three exemplary ways are as follows.

For example, the method 100 optionally further comprises alerting a user of the imaging instrument 141 to adapt at least one value associated to a parameter. As an example, the output from a similarity metric can be aggregated into a single number, e.g. sum or mean, and can be shown to the user in a graphical or numerical way or by means of a colored traffic light widget. This may simply tell the user that settings are not optimal yet and the user can interactively adjust the settings based on the indication. Hence, the user can manually adjust parameters of interests accordingly to improve quality of the image.

For example, the method 100 optionally further comprises generating a recommendation 142 whether at least one value associated to a parameter is to be increased or decreased.

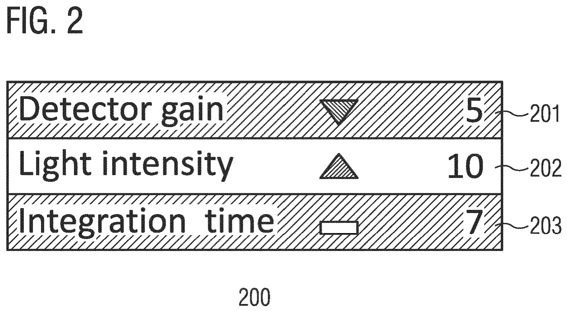

**Fig. 2** illustrates an exemplary graphical output of an assistance system 200 generating a recommendation 142 to adapt respective parameters. In other words, a recommendation is generated to adapt values assigned to keys to improve the quality of the image. The system 200 presents three exemplary operating parameters of the imaging instrument as their key-value pairs together with recommendations for the values. A detector gain 201 is proposed to be decreased by 5 points and a light intensity 202 is proposed to be increased by 10 points. An integration time 203 is illustrated to be in an optimal range, showing the current value, 7. The three operating parameters are only presented as an illustrative purpose. The number of key-value pairs comprised in the recommendation depends on the number of key-value pairs used to operate the imaging instrument or applications. Using the system 200, a user may be informed which parameters are off and by how much each parameter needs to be adjusted. It is worth nothing that generating the recommendation 142 can be performed real-time or close to real-time, allowing a user to repeatedly adjust image acquisition parameters based on the recommendation until satisfaction is achieved. The granularity of the information can be selectable at build-time or run-time based on the kinds of embeddings used.

For example, the method 100 optionally further comprises adjusting at least one value associated to a parameter 143 of the imaging instrument using the predicted values. Using the similarity metric described above or any vector norm, such as L1 norm, L2 norm, and p-norm. By comparing the prediction of the embeddings of the keys and the associated values of the pre-trained image model with the pre-computed embeddings of the keys and the associated values 120, a closest match can be found and used to automatically adjust parameters without intervention of an expert. The amount by which it deviates and the direction of the difference between the two vectors can allow a system to predict a better parameter to improve quality of an image. In an optional implementation, the system may iteratively make a step along a gradient of a value/parameter of interest and record a new image until the changes are smaller than a threshold.

For example, the method 100 optionally further comprises using information 150 about images acquired using the imaging instrument as a training data set to the pre-trained image model. As described above, the imaging instrument can generate the image and the metadata. The information about the image can be the image, multi-dimensional array of values, and the metadata. The training data for the pre-trained image model can be recorded automatically with the imaging instrument since the instrument can record and export, both, image data and instrument metadata. For experiment metadata, special care may be taken to acquire it in a structured format from the user or from a laboratory information management system (LIMS) if applicable. LIMS can be understood as a solution used to manage all aspects of a modern laboratory's operations such as managing samples, users, instruments, standards, and other laboratory functions to help automating workflows and integrate instruments.

As described above referring to Figs. 1 to 2, the embodiments of the method 100 provide a way to operate the imaging instrument by using the pre-trained image model, which can utilize relationships between images and desirable instrument setup and can compute a direction in which to improve for parameters of interests. The method 100 may facilitate an image acquisition procedure using the imaging instrument by reducing parameter optimization time and human intervention.

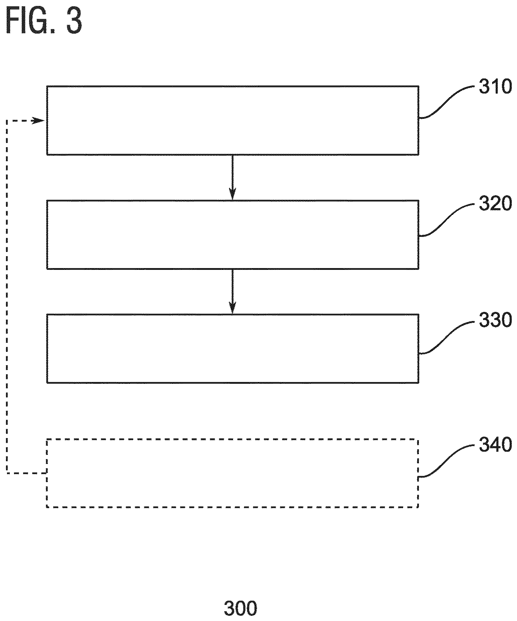

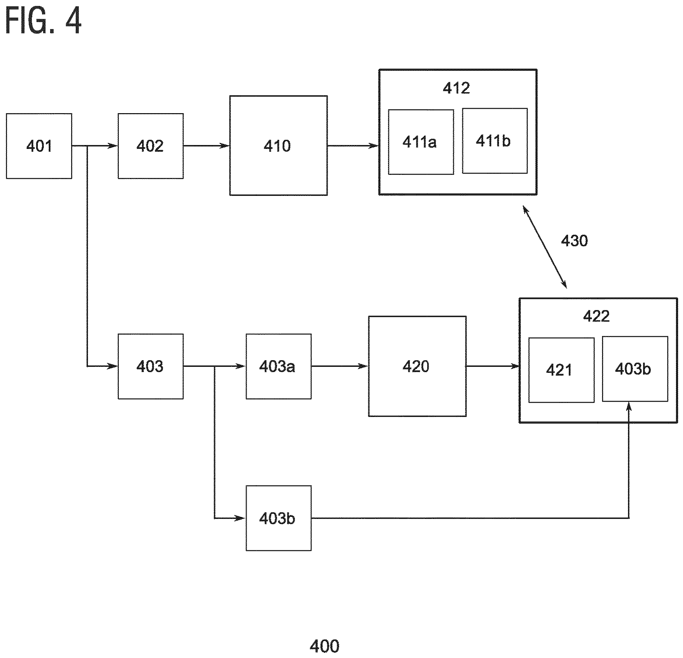

The method 100 uses the pre-trained image model. Examples as to how the image model may be trained are subsequently described referring to **Figs. 3** and **4.**

Fig. 3 illustrates an exemplary flowchart of a method 300 of training an image model $M$ for use in an imaging instrument. The method 300 comprises obtaining an image and corresponding keys and associated values 310 used to acquire the image and training the image model M 320 using the image as an input to predict embeddings of the keys and the associated values. The training comprises using pre-computed embeddings of the keys and associated values 330 used to acquire the image to compute a loss function $L$.

The method 300 can provide a way to associate images with image acquisition parameters using the pre-computed embeddings of the keys and the associated values. In other words, the method 300 can train the image model $M$ to map image representation into a semantic space. Moreover, by offering the pre-computed embeddings of the keys and the associated values, it can simplify training of the image model $M$ without having labor-intensive and time-consuming labeled training image data to configure links between images and the semantic space.

For example, the keys in the method 300 are optionally parameters of the imaging instruments comprising at least one of illumination characteristics, information on optics used, actuator settings, photosensors used, information of a specimen type, information on an organism, information on a cell culture system, information on chemical or physical perturbations as shown above referring to Fig. 1.

The obtained images, corresponding keys and associated values, as a training set, comprises tuples of image data $I_j$ and metadata. Referring to Fig. 1, the metadata is represented as key-value pairs, such that keys are words, names of parameters, and values are numbers, parameter values. Since both experiment and instrument metadata can affect quality of image, both types of metadata are used for training. Optionally, the metadata further comprises an upper and lower bound for each key, which may prevent damages to the imaging instrument.

Optionally, the values are normalized to be converted to a percentage. As an example, values are normalized to a range within [0, 1]. The normalized values may be converted to a percentage and left unchanged otherwise.

For example, the keys are passed through a pre-trained language model to generate semantic embeddings. The associated values to the keys are optionally either concatenated with the embeddings of the keys or represented with the embeddings of the keys as tuples $(e_m, v_m)$ similar to Fig. 1. A dimension of the sematic word embeddings is denoted as $d$, a dimension of the numerical instrument parameter values is denoted as $v$, and $m$ is the number of tuples in the instrument metadata.

The tuple representation $(e_m, v_m)$ may have an advantage of being able to define an additional term in the loss function $L$ and to weight it separately from the loss function $L$ for the keys. Quantization of the image model output to the nearest instrument parameter embedding can be performed to allow the image model $M$ to learn image representations which are close to the word embeddings outputted by the pre-trained language model. As an example, the quantization of the image model output can be defined as follows:

$$M\left(I_j\right) = \hat{e}_m$$

, where $e_m = argmin_m \|M(I_j) - e_m\|$ and $\hat{e}_m$ is a prediction of embeddings of the keys.

In other words, the prediction for instrument parameter names is quantized by assigning it to the value of the closest vector $e_m$ predicted by the pre-trained language model. This prevents the image model $M$ from moving too far from the keys we need to adjust parameters in the instrument later.

For example, the loss function $L$ optionally comprises contributions of a loss $loss$, caused by the embeddings of the keys, a loss caused by the associated values, and a loss caused by a quantization of the predicted embeddings of the keys. For training the image model $M$, as an example, a compound loss function $L$ may be optionally used as follows:

$$L = \alpha \cdot loss_1\left(\hat{U}\right) + \beta \cdot loss_1\left(\hat{Q}\right) + \gamma \cdot \left\|M\left(I_j\right) - e_m\right\|$$

, where $\alpha, \beta, \gamma$ are tuning parameters for weighting the different contributions to the loss function, $\hat{U}$ and $\hat{Q}$ are matrices of the predicted embeddings of the keys and the associated values, and $\|M(I_j) - e_m\|$ is a quantization loss. A compound loss function in the context of machine learning and deep learning can be understood as a combination of two or more different loss functions resigned to optimize a model with respect to multiple objectives simultaneously.

For example, the loss *loss,* caused by the embeddings of the keys and by the associated values is optionally computed as a negative log likelihood of a similarity between the predicted embeddings of the keys and associated values by the image model and the pre-computed embeddings of the keys and the associated values. The loss *loss,* may be optionally defined as follows:

$$loss_1(\hat{T}) = -\log\left(\frac{e^{-sim\_metric(\hat{T},T)}}{\sum_j e^{-sim\_metric(\hat{T},T)}}\right)$$

, where *sim_metric* is a similarity metric as described above referring to Fig. 1 and $\hat{T}$ is a concatenation of $\hat{U}$ and $\hat{Q}$ or tuples of the predicted embeddings of the keys and the associated values. The loss *loss,* can resemble a contrastive learning goal. The contrastive learning can be understood as a technique used in machine learning, particularly in unsupervised and self-supervised learning settings. The primary goal of the contrastive learning can be to learn effective representations of data by teaching a model to distinguish between similar and dissimilar pairs of data points.

For example, after training, the image model *M* can predict embeddings of keys and associated values resulting in an image fulfilling a predetermined quality criterion. Image quality can be crucial for accurate analysis and interpretation, especially in scientific research and medical diagnostics. As described above, the loss *loss,* can determine a quality of learned representations or outputs. The loss function *L* quantifies the difference between the predicted embeddings of the keys and associated value of the image model *M* and actual target keys and values. As an example, a quality of a microscopy image can be influenced by various factors and multiple criteria can be used to evaluate it, such as resolution, contrast, signal-to-noise ratio, brightness and illumination, magnification and scale accuracy, artifact minimization, and temporal resolution for live-cell imaging. Therefore, various parameters can be adjusted accordingly after training the image model *M* as shown in Fig. 1 and additional and optional features explained above in connection with Fig. 1.

In the training process as described above, the image model *M* can learn and associate an image with semantic embeddings of the keys and the associated values, which may result in a prediction of embeddings keys and corresponding values in order to improve the quality of the image.

In some embodiments aiming to continuously improve the image model *M*, the method 300 optionally further comprises receiving information about images 340 from an imaging instrument to be used as a training data set. As described above, the images comprise metadata used to acquire the images, which can be used to predict embeddings of keys and associated values. Adding new training data to a model can offer several advantages. Additional training data can provide new examples and variations, helping the image model *M* to learn more comprehensive patterns and reducing overfitting an original training set, which may result in improved accuracy, generalization, and robustness of the model. Over time, a distribution of data can change duet to evolving trends and technologies. By adding new training data, the model can adapt to these changes, maintaining its relevance and effectiveness.

As an example, the pre-computed embeddings of keys used in method 100 in Fig. 1 and method 300 in Fig. 3 can be generated using the pre-trained language model. The language model can be based on a transformer architecture, a form of deep neural network in order to learn semantic concepts of the keys in a self-supervised fashion. The transformer architecture can be understood as a deep learning model based on a self-attention mechanism that weights the importance of each part of the input data differently.

For example, an encoder of a transformer architecture may be used to generate latent embeddings of keys and values. The encoder processes an input sequence and map it into a higher-dimensional space, a set of continuous representations that contain the input sequence's contextual information. An output of the encoder is a dense vectorial representation of semantics of the input. In this context, a vector can be understood as an embedding.

In another embodiment, the transformer architecture may comprise two main parts: an encoder and a decoder. As described above, the encoder converts keys and values into latent embeddings. The decoder generates an output sequence from the encoded representations to predict a whole sequence of future latent embeddings corresponding to instrument parameter settings, i.e. keys and values, which may help the instrument to adapt the parameter setting dynamically in time series. Advantageously, optionally, after training, weights of the language model remain unchanged.

For example, words $x_l$ represent names of parameters, keys, and transformed into vectors $x_l$ with a chosen dimension $d$. From these vectors, a fine-grained latent semantic space $z_f \in R^{d \times N}$ can be constructed, where $N$ is the number of all vectors. Alternatively, groups of words corresponding to an instrument of interest, for example a microscope, can be passed through the language model one-by-one and their centroids $c_k$ are computed in the vector space. In this context, a centroid can be understood as a central point in semantic vector spaces. From these $k$ vectors, a coarse-grained semantic space $z_c \in R^{d \times K}$ for the instrument, such as a microscope, is generated, where $K \ll N$. The choice between the fine-grained semantic space and the coarse-grained semantic space depends on specific requirements of a task to be performed, such as a desired level of semantic precision. It can be advantageous to use $z_c$ for alerting a user of the imaging instrument 141 and generating a recommendation 142 since it can provide generalized and broad representation of word meanings and relationship. For adjusting at least one value associated to a parameter 143, it may require higher precision than the above mentioned concepts 141 and 142 for automated parameter adjustment. In such case, $z_f$ can be suited since it can offer a highly detailed and nuanced representation of word meanings and relationships. It can capture subtle differences and distinctions between words and phrases, often tailored to specific contexts, domains, or tasks.

**Fig. 4** illustrates an exemplary schematic diagram of training procedure 400 referring to Fig. 3. The training data set 401 comprises an image data 402 and metadata 403, wherein in this context the metadata 403 are keys and associated values used to acquire the image 402. The image data 402 is passed through the image model $M$ 410 resulting predicted embeddings of the keys 411a and their associated values 411b. Concatenated or tuples of the predicted embeddings and associated values 412 can be used alternatively. The metadata 403 comprises the keys 403a and their associated values 403b. The keys 403a are passed through the pre-trained language model 420, wherein its weight is frozen. The keys 403a are transformed into embeddings 421a via the pre-trained language model 420. The associated values 403b are either concatenated with the embeddings 421a or represented with the embeddings 421a as tuples 422. The output of the image model $M$ 410 can be either a single matrix $\hat{T}_J \in R^{(d+v)\times m}$ or two matrices $\hat{T}_J \in R^{d\times m}$ and $\widehat{Q_J} \in R^{v\times m}$, where $d$ is a dimension of the semantic word embeddings, $v$ is a dimension of the numerical instrument parameter values, $m$ is the number of tuples in the instrument metadata. In this context, $\hat{T}_J$ is 412, $\hat{U}_J$ is 411a, and $\widehat{Q_J}$ is 411b. For the pre-trained language model 420, $U$ is a matrix 421 comprising all $m$ parameter name embeddings for a given instrument, $Q$ is a matrix 305b of $m$ instrument parameter values and $T$ is their concatenation or representation as tuples 422.

In some embodiments, the associated values may be passed through a neural network to acquire value embeddings of dimension $v$. For example, the neural network may be a multilayer perception, which comprises multiple layers of neurons. The layers are usually an input layer, one or more hidden layers, and an output layer. Each neuron in a layer connects to every neuron in the subsequent layer, forming a densely connected network. The neurons in these layers typically use nonlinear activation functions, which allow the network to learn complex patterns in data.

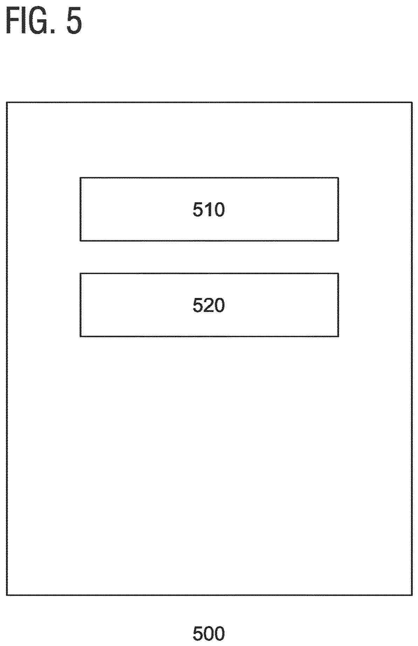

**Fig 5.** illustrates a system 500 for providing assistance to an imaging instrument. The system 500 comprises an input interface 510 configured to receive an input interface configured to receive an image acquired using the imaging instrument and a processor 520 configured to perform the method 100 and the method 300 referring to Figs. 1 - 4. It is also configured to implement one or more additional optional features corresponding to one or more of the optional aspects of the concept described above.

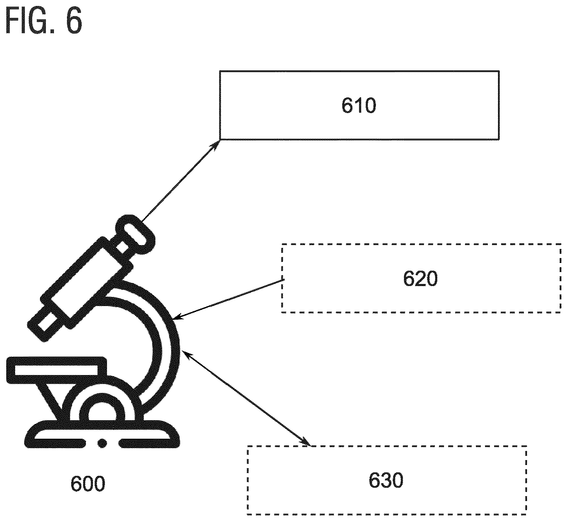

**Fig. 6** illustrates an embodiment of a microscope 600 configured to support of implement one of more of the aspects described previously. The microscope 600 comprises an output interface 610 configured to transmit an image acquired together with corresponding keys or embeddings of the keys plus the associated values used to acquire the image. The transmitted image together with the keys and the associated values to the image can be used as the training data set as described above referring to Figs. 4 and 5. Also, the image can be used to predict embeddings of the keys and associated values as described above referring to Fig. 1, in order to improve the image quality.

For example, the microscope 600 optionally further comprises an input interface 620, configured to receive at least values associated with keys or embeddings of keys from the image for providing assistance to an imaging instrument. The received values can be values of parameters (values) used to acquire an image using the microscope 600. Using the values, the microscope 600 can be operated according to 141, 142, or 143 in Fig. 1.

For example, the microscope 600 optionally further comprises an interface to a LIMS 630. The LIMS 630 is designed to support a modern laboratory operation. It offers a comprehensive framework for managing all aspects of laboratory workflows, from sample management to data analysis, and reporting. As described above in the context of the output interface 710 and the input interface 620, the LIMS 630 can be configured to perform tasks according to Figs. 1 to 4 and one or more additional optional features corresponding to one or more aspects of the proposed concept, or one or more examples described above.

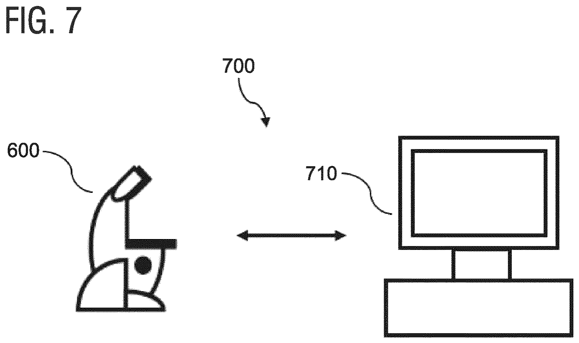

Some embodiments relate to the microscope 600 comprised in a system as described in connection with one or more of the Figs. 1 to 6. Alternatively, a microscope may be part of or connected to a system as described in connection with one or more of the Figs. 1 to 6. **Fig. 7** shows a schematic illustration of a system 700 configured to perform a method described herein.

The system 700 comprises the microscope 600 and a computer system 710. The microscope 600 is configured to take images and is connected to the computer system 710. The computer system 710 is configured to execute at least a part of a method described herein. The computer system 710 may be configured to execute a machine learning algorithm. The computer system 710 and microscope 600 may be separate entities but can also be integrated together in one common housing. The computer system 710 may be part of a central processing system of the microscope 600 and/or the computer system 710 may be part of a subcomponent of the microscope 600, such as a sensor, an actor, a camera or an illumination unit, etc. of the microscope 600.

The computer system 710 may be a local computer device (e.g. personal computer, laptop, tablet computer or mobile phone) with one or more processors and one or more storage devices or may be a distributed computer system (e.g. a cloud computing system with one or more processors and one or more storage devices distributed at various locations, for example, at a local client and/or one or more remote server farms and/or data centers). The computer system 710 may comprise any circuit or combination of circuits. In one embodiment, the computer system 710 may include one or more processors which can be of any type. As used herein, processor may mean any type of computational circuit, such as but not limited to a microprocessor, a microcontroller, a complex instruction set computing (CISC) microprocessor, a reduced instruction set computing (RISC) microprocessor, a very long instruction word (VLIW) microprocessor, a graphics processor, a digital signal processor (DSP), multiple core processor, a field programmable gate array (FPGA), for example, of a microscope or a microscope component (e.g. camera) or any other type of processor or processing circuit. Other types of circuits that may be included in the computer system 710 may be a custom circuit, an application-specific integrated circuit (ASIC), or the like, such as, for example, one or more circuits (such as a communication circuit) for use in wireless devices like mobile telephones, tablet computers, laptop computers, two-way radios, and similar electronic systems. The computer system 710 may include one or more storage devices, which may include one or more memory elements suitable to the particular application, such as a main memory in the form of random access memory (RAM), one or more hard drives, and/or one or more drives that handle removable media such as compact disks (CD), flash memory cards, digital video disk (DVD), and the like. The computer system 710 may also include a display device, one or more speakers, and a keyboard and/or controller, which can include a mouse, trackball, touch screen, voice-recognition device, or any other device that permits a system user to input information into and receive information from the computer system 710.

Some or all of the method steps may be executed by (or using) a hardware apparatus, like for example, a processor, a microprocessor, a programmable computer or an electronic circuit. In some embodiments, some one or more of the most important method steps may be executed by such an apparatus.

Depending on certain implementation requirements, embodiments of the invention can be implemented in hardware or in software. The implementation can be performed using a non-transitory storage medium such as a digital storage medium, for example a floppy disc, a DVD, a Blu-Ray, a CD, a ROM, a PROM, and EPROM, an EEPROM or a FLASH memory, having electronically readable control signals stored thereon, which cooperate (or are capable of cooperating) with a programmable computer system such that the respective method is performed. Therefore, the digital storage medium may be computer readable.

Some embodiments according to the invention comprise a data carrier having electronically readable control signals, which are capable of cooperating with a programmable computer system, such that one of the methods described herein is performed.

Generally, embodiments of the present invention can be implemented as a computer program product with a program code, the program code being operative for performing one of the methods when the computer program product runs on a computer. The program code may, for example, be stored on a machine-readable carrier.

Other embodiments comprise the computer program for performing one of the methods described herein, stored on a machine-readable carrier.

In other words, an embodiment of the present invention is, therefore, a computer program having a program code for performing one of the methods described herein, when the computer program runs on a computer.

A further embodiment of the present invention is, therefore, a storage medium (or a data carrier, or a computer-readable medium) comprising, stored thereon, the computer program for performing one of the methods described herein when it is performed by a processor.

The data carrier, the digital storage medium or the recorded medium are typically tangible and/or non-transitionary. A further embodiment of the present invention is an apparatus as described herein comprising a processor and the storage medium.

A further embodiment of the invention is, therefore, a data stream or a sequence of signals representing the computer program for performing one of the methods described herein. The data stream or the sequence of signals may, for example, be configured to be transferred via a data communication connection, for example, via the internet.

A further embodiment comprises a processing means, for example, a computer or a programmable logic device, configured to, or adapted to, perform one of the methods described herein. A further embodiment comprises a computer having installed thereon the computer program for performing one of the methods described herein.

A further embodiment according to the invention comprises an apparatus or a system configured to transfer (for example, electronically or optically) a computer program for performing one of the methods described herein to a receiver. The receiver may, for example, be a computer, a mobile device, a memory device or the like. The apparatus or system may, for example, comprise a file server for transferring the computer program to the receiver.

In some embodiments, a programmable logic device (for example, a field programmable gate array) may be used to perform some or all of the functionalities of the methods described herein. In some embodiments, a field programmable gate array may cooperate with a microprocessor in order to perform one of the methods described herein. Generally, the methods are preferably performed by any hardware apparatus.

Generally, embodiments of the present invention can be implemented as a computer program product with a program code, the program code being operative for performing one of the methods when the computer program product runs on a computer. The program code may, for example, be stored on a machine-readable carrier.

Other embodiments comprise the computer program for performing one of the methods described herein, stored on a machine-readable carrier.

In other words, an embodiment of the present invention is, therefore, a computer program having a program code for performing one of the methods described herein, when the computer program runs on a computer.

Embodiments may be based on using a machine-learning model or machine-learning algorithm. Machine learning may refer to algorithms and statistical models that computer systems may use to perform a specific task without using explicit instructions, instead relying on models and inference. For example, in machine-learning, instead of a rule-based transformation of data, a transformation of data may be used, that is inferred from an analysis of historical and/or training data. For example, the content of images may be analyzed using a machine-learning model or using a machine-learning algorithm. In order for the machine-learning model to analyze the content of an image, the machine-learning model may be trained using training images as input and training content information as output. By training the machine-learning model with a large number of training images and/or training sequences (e.g. words or sentences) and associated training content information (e.g. labels or annotations), the machine-learning model "learns" to recognize the content of the images, so the content of images that are not included in the training data can be recognized using the machine-learning model. The same principle may be used for other kinds of sensor data as well: By training a machine-learning model using training sensor data and a desired output, the machine-learning model "learns" a transformation between the sensor data and the output, which can be used to provide an output based on non-training sensor data provided to the machine-learning model. The provided data (e.g. sensor data, meta data and/or image data) may be preprocessed to obtain a feature vector, which is used as input to the machine-learning model.

Machine-learning models may be trained using training input data. The examples specified above use a training method called "supervised learning". In supervised learning, the machine-learning model is trained using a plurality of training samples, wherein each sample may comprise a plurality of input data values, and a plurality of desired output values, i.e. each training sample is associated with a desired output value. By specifying both training samples and desired output values, the machine-learning model "learns" which output value to provide based on an input sample that is similar to the samples provided during the training. Apart from supervised learning, semi-supervised learning may be used. In semi-supervised learning, some of the training samples lack a corresponding desired output value. Supervised learning may be based on a supervised learning algorithm (e.g. a classification algorithm, a regression algorithm or a similarity learning algorithm. Classification algorithms may be used when the outputs are restricted to a limited set of values (categorical variables), i.e. the input is classified to one of the limited set of values. Regression algorithms may be used when the outputs may have any numerical value (within a range). Similarity learning algorithms may be similar to both classification and regression algorithms but are based on learning from examples using a similarity function that measures how similar or related two objects are. Apart from supervised or semi-supervised learning, unsupervised learning may be used to train the machine-learning model. In unsupervised learning, (only) input data might be supplied and an unsupervised learning algorithm may be used to find structure in the input data (e.g. by grouping or clustering the input data, finding commonalities in the data). Clustering is the assignment of input data comprising a plurality of input values into subsets (clusters) so that input values within the same cluster are similar according to one or more (pre-defined) similarity criteria, while being dissimilar to input values that are included in other clusters.

Reinforcement learning is a third group of machine-learning algorithms. In other words, reinforcement learning may be used to train the machine-learning model. In reinforcement learning, one or more software actors (called "software agents") are trained to take actions in an environment. Based on the taken actions, a reward is calculated. Reinforcement learning is based on training the one or more software agents to choose the actions such, that the cumulative reward is increased, leading to software agents that become better at the task they are given (as evidenced by increasing rewards).

Furthermore, some techniques may be applied to some of the machine-learning algorithms. For example, feature learning may be used. In other words, the machine-learning model may at least partially be trained using feature learning, and/or the machine-learning algorithm may comprise a feature learning component. Feature learning algorithms, which may be called representation learning algorithms, may preserve the information in their input but also transform it in a way that makes it useful, often as a pre-processing step before performing classification or predictions. Feature learning may be based on principal components analysis or cluster analysis, for example.

In some examples, anomaly detection (i.e. outlier detection) may be used, which is aimed at providing an identification of input values that raise suspicions by differing significantly from the majority of input or training data. In other words, the machine-learning model may at least partially be trained using anomaly detection, and/or the machine-learning algorithm may comprise an anomaly detection component.

In some examples, the machine-learning algorithm may use a decision tree as a predictive model. In other words, the machine-learning model may be based on a decision tree. In a decision tree, observations about an item (e.g. a set of input values) may be represented by the branches of the decision tree, and an output value corresponding to the item may be represented by the leaves of the decision tree. Decision trees may support both discrete values and continuous values as output values. If discrete values are used, the decision tree may be denoted a classification tree, if continuous values are used, the decision tree may be denoted a regression tree.

Association rules are a further technique that may be used in machine-learning algorithms. In other words, the machine-learning model may be based on one or more association rules. Association rules are created by identifying relationships between variables in large amounts of data. The machine-learning algorithm may identify and/or utilize one or more relational rules that represent the knowledge that is derived from the data. The rules may e.g. be used to store, manipulate, or apply the knowledge.

Machine-learning algorithms are usually based on a machine-learning model. In other words, the term "machine-learning algorithm" may denote a set of instructions that may be used to create, train or use a machine-learning model. The term "machine-learning model" may denote a data structure and/or set of rules that represents the learned knowledge (e.g. based on the training performed by the machine-learning algorithm). In embodiments, the usage of a machine-learning algorithm may imply the usage of an underlying machine- learning model (or of a plurality of underlying machine-learning models). The usage of a machine-learning model may imply that the machine-learning model and/or the data structure/set of rules that is the machine-learning model is trained by a machine-learning algorithm.

For example, the machine-learning model may be an artificial neural network (ANN). ANNs are systems that are inspired by biological neural networks, such as can be found in a retina or a brain. ANNs comprise a plurality of interconnected nodes and a plurality of connections, so-called edges, between the nodes. There are usually three types of nodes, input nodes that receiving input values, hidden nodes that are (only) connected to other nodes, and output nodes that provide output values. Each node may represent an artificial neuron. Each edge may transmit information, from one node to another. The output of a node may be defined as a (non-linear) function of its inputs (e.g. of the sum of its inputs). The inputs of a node may be used in the function based on a "weight" of the edge or of the node that provides the input. The weight of nodes and/or of edges may be adjusted in the learning process. In other words, the training of an artificial neural network may comprise adjusting the weights of the nodes and/or edges of the artificial neural network, i.e. to achieve a desired output for a given input.

Alternatively, the machine-learning model may be a support vector machine, a random forest model or a gradient boosting model. Support vector machines (i.e. support vector networks) are supervised learning models with associated learning algorithms that may be used to analyze data (e.g. in classification or regression analysis). Support vector machines may be trained by providing an input with a plurality of training input values that belong to one of two categories. The support vector machine may be trained to assign a new input value to one of the two categories. Alternatively, the machine-learning model may be a Bayesian network, which is a probabilistic directed acyclic graphical model. A Bayesian network may represent a set of random variables and their conditional dependencies using a directed acyclic graph. Alternatively, the machine-learning model may be based on a genetic algorithm, which is a search algorithm and heuristic technique that mimics the process of natural selection.

If some aspects have been described in relation to a device or system, these aspects should also be understood as a description of the corresponding method and vice versa. For example, a block, device or functional aspect of the device or system may correspond to a feature, such as a method step, of the corresponding method. Accordingly, aspects described in relation to a method shall also be understood as a description of a corresponding block, a corresponding element, a property or a functional feature of a corresponding device or a corresponding system.

The following claims are hereby incorporated in the detailed description, wherein each claim may stand on its own as a separate example. It should also be noted that although in the claims a dependent claim refers to a particular combination with one or more other claims, other examples may also include a combination of the dependent claim with the subject matter of any other dependent or independent claim. Such combinations are hereby explicitly proposed, unless it is stated in the individual case that a particular combination is not intended. Furthermore, features of a claim should also be included for any other independent claim, even if that claim is not directly defined as dependent on that other independent claim.

The aspects and features described in relation to a particular one of the previous examples may also be combined with one or more of the further examples to replace an identical or similar feature of that further example or to additionally introduce the features into the further example.

**List of reference Signs**

100 method
110 using an image as an input for a pre-trained image model
120 comparing a prediction of embeddings with pre-computed embeddings
130 generating information
141 alerting a user

142 generating a recommendation
143 adjusting at least one value associated to a parameter
150 using information
200 assistance system
201 detector gain
202 light intensity
203 integration time
300 method
310 obtaining an image and corresponding keys and associated values
320 training an image model
330 using pre-computed embeddings
340 receiving information about images
400 schematic diagram of training procedure
401 training data set
402 image data
403 metadata
403a keys
403b associated values
410 image model
412 predicted embeddings of keys and associated values
411a the predicted embeddings of the keys
412b the associated values
420 pre-trained language model
421 matrix of embeddings of keys
422 tuples of key and values
430 comparison
500 system
510 input interface
520 processor
600 microscope
610 output interface
620 input interface
630 interface to a laboratory information management system
700 system
710 computer system

**Claims**

1. A method (100) of operating an imaging instrument, the method (100) comprising:

   using an image as an input for a pre-trained image model (110), the pre-trained image model generating a prediction of embeddings of keys and associated predicted values as an output;
   comparing the prediction of the embedding of the keys and the associated predicted values of the pre-trained image model (120) with pre-computed embeddings of the keys and the associated values used to generate the image; and
   generating information on a quality of the values used to generate the image (130).

2. The method (100) of claim 1, wherein keys are parameters of the imaging instruments comprising at least one of illumination characteristics, information on optics used, actuator settings, photosensors used, information of a specimen type, information on an organism, information on a cell culture system, information on chemical or physical perturbations.

3. The method (100) of claim 1 or 2, further comprising: alerting a user of the imaging instrument (141) to adapt at least one value associated to a parameter.

4. The method (100) of claim 1 or 2, further comprising: generating a recommendation (142) whether at least one value associated to a parameter is to be increased or decreased.

5. The method (100) of claim 1 or 2, further comprising: adjusting at least one value associated to a parameter (143) of the imaging instrument using the predicted values.

6. The method (100) of any of claims 1 to 5, using information (150) about images acquired using the imaging instrument as a training data set to the pre-trained image model.

7. A method (300) of training an image model for use in an imaging instrument, the method (300) comprising:

   obtaining (310) an image and corresponding keys and associated values used to acquire the image; and
   training (320) the image model using the image as an input to predict embeddings of the keys and the associated values; the training comprising:
   using (330) pre-computed embeddings of the keys and the associated values used to acquire the image to compute a loss function.

8. The method (300) of claim 7, wherein keys are parameters of the imaging instruments comprising at least one of illumination characteristics, information on optics used, actuator settings, photosensors used, information of a specimen type, information on an organism, information on a cell culture system, information on chemical or physical perturbations.

9. The method (300) of claim 7 or 8, wherein the values are normalized to be converted to a percentage.

10. The method (300) of claim 9, wherein the normalized values are represented with the embeddings of the keys as tuples.

11. The method (300) of any one of claims 7 to 10, wherein the loss function comprises contributions of a loss caused by the embeddings of the keys, a loss caused by the associated values, and a loss caused by a quantization of the predicted embeddings of the keys.

12. The method (300) of claim 11, wherein the loss caused by the embeddings of the keys and by the associated values is computed as a negative log likelihood of a similarity between the predicted embeddings of the keys and associated values by the image model and the pre-computed embeddings of the keys and the associated values.

13. The method (300) of any one of claims 7 to 12, wherein the trained image model predicts embeddings of keys and associated values resulting in an image fulfilling a predetermined quality criterion.

14. The method (300) of any one of claims 7 to 13, further comprising: receiving information about images (340) from the imaging instrument to be used as a training data set.

15. A system (500) for providing assistance to an imaging instrument, the system comprising:

   an input interface (510) configured to receive an image acquired using the imaging instrument; and
   a processor (520) configured to perform the method of one of the claims 1 to 14.

16. A microscope (600), comprising:
   an output interface (610), configured to transmit an image acquired together with corresponding keys or embeddings of the keys and associated values to a system for providing assistance to an imaging instrument.

17. The microscope (600) of claim 16, further comprising:
   an input interface (620), configured to receive at least values associated with keys or embeddings of keys from the system for providing assistance to the imaging instrument.

18. The microscope (600) of claim 16 or 17, further comprising: an interface (630) to a laboratory information management system.

19. A computer program with a program code for performing the method according to one of the claims 1 to 14 when the computer program is run on a processor.

# FIG. 1

100

# FIG. 2

| | | | |
|---|---|---|---|
| Detector gain | ▽ | 5 | ~201 |
| Light intensity | △ | 10 | ~202 |
| Integration time | ▭ | 7 | ~203 |

200

FIG. 3

300

# FIG. 4

400

FIG. 5

500

FIG. 6

FIG. 7

**EUROPEAN SEARCH REPORT**

Application Number

EP 24 17 6078

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2021/342636 A1 (SIECKMANN FRANK [DE] ET AL) 4 November 2021 (2021-11-04) * paragraphs [0074], [0077], [0099], [0100], [0109]; figures 5, 12 * ----- | 1-19 | INV. G02B21/36 G06N3/02 G06T7/00 G06V10/82 |
| X | AUDREY DURAND ET AL: "A machine learning approach for online automated optimization of super-resolution optical microscopy", NATURE COMMUNICATIONS, vol. 9, no. 1, 1 December 2018 (2018-12-01), XP055645800, DOI: 10.1038/s41467-018-07668-y * the whole document * ----- | 1,2,4-19 | |
| X | US 2022/028116 A1 (SIECKMANN FRANK [DE] ET AL) 27 January 2022 (2022-01-27) * paragraphs [0038], [0039], [0060], [0073]; figures 1, 2 * ----- | 1,2,4-19 | |

**TECHNICAL FIELDS SEARCHED (IPC)**

G02B
G06V
G06T
G06N

The present search report has been drawn up for all claims

| Place of search | Date of completion of the search | Examiner |
|---|---|---|
| Munich | 14 October 2024 | Haan, Martine |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons
...............................................................................................
& : member of the same patent family, corresponding
   document

EPO FORM 1503 03.82 (P04C01)

**EP 4 650 853 A1**

## ANNEX TO THE EUROPEAN SEARCH REPORT
## ON EUROPEAN PATENT APPLICATION NO.

EP 24 17 6078

14-10-2024

| Patent document cited in search report | Publication date | Patent family member(s) | | Publication date |
|---|---|---|---|---|
| US 2021342636 A1 | 04-11-2021 | CN | 112868027 A | 28-05-2021 |
| | | DE | 102018217901 A1 | 23-04-2020 |
| | | EP | 3867799 A1 | 25-08-2021 |
| | | JP | 7331097 B2 | 22-08-2023 |
| | | JP | 2022505252 A | 14-01-2022 |
| | | US | 2021342636 A1 | 04-11-2021 |
| | | WO | 2020078679 A1 | 23-04-2020 |
| US 2022028116 A1 | 27-01-2022 | DE | 102018219867 A1 | 20-05-2020 |
| | | EP | 3884657 A2 | 29-09-2021 |
| | | JP | 7507760 B2 | 28-06-2024 |
| | | JP | 2022509959 A | 25-01-2022 |
| | | US | 2022028116 A1 | 27-01-2022 |
| | | WO | 2020104521 A2 | 28-05-2020 |

EPO FORM P0459